# EUROPEAN PATENT SPECIFICATION

(11) **EP 2 683 163 B1**
(45) Date of publication and mention of the grant of the patent: **15.05.2019**
(21) Application number: 12755369.1
(22) Date of filing: 02.03.2012
(51) Int. Cl.: H04N 7/173, G06F 13/00, H04H 20/18, H04H 60/82, H04H 20/24, H04L 29/06, H04N 21/462, H04N 21/643, H04N 21/8547

(54) **SYNCHRONIZED CONTENT BROADCAST DISTRIBUTION SYSTEM**
SYNCHRONISIERTES INHALTSRUNDSENDUNGSSYSTEM
SYSTÈME DE DISTRIBUTION DE RADIODIFFUSION DE CONTENU SYNCHRONISÉ

(30) Priority: 04.03.2011 JP 2011048044
(43) Date of publication of application: 08.01.2014
(73) Proprietor: Dentsu Inc., Tokyo 105-7001 (JP); Asahi Television Broadcasting Corporation, Osaka, 553-8503 (JP); D2C dot Inc., Tokyo 104-0061 (JP)
(72) Inventor: MIURA, Fumio, Tokyo 105-7001 (JP); FUJI, Takashi, Tokyo 105-7001 (JP); KANDORI, Keishi, Osaka-shi Osaka 553-8503 (JP); MORIKAWA, Tatsuya, Tokyo 1010054 (JP)
(74) Representative: Gill Jennings & Every LLP
(86) International application number: PCT/JP2012/055420
(87) International publication number: WO 2012/121158

(56) References cited:
- WO-A1-00/62470
- WO-A1-98/41020
- WO-A1-98/43406
- WO-A2-01/39506
- JP-A- 2001 054 094
- JP-A- 2010 154 523

## Description

### Technical Field

The present invention relates to a sync content broadcast distribution system utilizing a simultaneous broadcasting.

### Background Art

The spread of internet communication networks and satellite broadcasting has been accompanied by the development of high-feature mobile telephones such as smart phones, and of high-feature reproducing terminal devices, utilized by large numbers of users.

Simultaneous distribution services over an IP (Internet Protocol) are now being provided which enable broadcasting of the same content as television or radio broadcasts, or the television or radio broadcasts themselves, in real time, simultaneously with those television and radio broadcasts and using different transmission different from the main broadcasts, such as an IP network, and an IP simulcast TV, an IP simulcast radio, etc. able to take advantage of those services are now coming into use by the general public.

A sync content broadcast distribution for implementing a sync content (a broadcast-linked advertisement) which is configured to cause an advertisement related information which is hyperlinked to an advertiser's site to be displayed on a reproducing terminal device, in synchronization with an advertisement (a commercial; CM) frame to be broadcasted on a television or a radio, has also been developed.

### [Prior Art Reference(s)]

### [Patent Reference(s)]

Patent Document 1: JP-A-2009-278315

### Disclosure of Invention

However, in the IP simulcast radio and the IP simulcast television which are configured to distribute the normal radio and television broadcasts (the broadcasts distributed from the radio station or the television station) to a variety of devices (the reproducing devices) such as a PC, a smart phone, a tablet terminal, or information appliances using the IP public network in synchronization with the broadcasting, a delay may occur in the reproducing time due to the various causes, and a degree of such delay differs with the type of reproducing device being used. This causes a problem with sync content display timing in the reproducing devices. The delay in the display of sync content is normally smaller than the delay in the reproducing of the main program of the IP simulcast radio or the IP simulcast television. The problem thus arises such that it causes the sync content to be displayed on the reproducing device software (the display screen) of the reproducing device before the distribution of the main program is broadcasted (i.e., an "offset" occurs). As an example, in the case of the sync content, when the main program is a soccer broadcast, it causes inconvenience (e.g., the offset occurs) such that the scoreboard (with the ads), on which the score has already been displayed, is displayed on the reproducing device software (the display screen) before the main program is distributed.

In view of the above-described problem of the conventional art, it is therefore an object of the present invention to provide a sync content broadcast distribution system which is configured to synchronize a sync content with an on-air main program and/or commercial by a simple and quick method without producing an offset, even when a delay occurs between an on-air commercial or main program and a webpage or an application, etc. so as to display the web page, the application, etc. on a display of a reproducing device.

The aforementioned object of the present invention can be accomplished by a sync content broadcast distribution system for synchronizing a sync content to an IP streamed broadcast data, comprising:
a time code generator for producing a time code matched to an absolute time and embedding the time code in a broadcast data outputted from a broadcast station master;
an encoder for encoding the broadcast data in which the time code is embedded and converting the encoded broadcast data to an IP stream;
a streaming server for distributing the IP stream;
a decoder for decoding the IP stream distributed from the streaming server and reading the time code embedded in the IP stream;
a web server for reading sync content from a storage device storing at least one, two, or more sync contents and distributing the sync content;
a reproducing device for receiving the IP stream distributed from the streaming server and the sync content distributed from the web server; and
a trigger time computation device for calculating a time difference between a time indicative of the time code which is read from the IP stream by the decoder and an absolute time and for calculating a trigger time corresponding to the time difference by adding the calculated time difference to a trigger occurrence time of the sync content,
wherein the web server is configured to distribute said sync content to said reproducing device in order to make the reproducing device to execute a processing on the sync content at a time point where the time code embedded in the IP stream coincides with the trigger occurrence time of sync content received from the web server
wherein said web server is configured for distributing said sync content read from said storage device based on said trigger time calculated by said trigger time computation device to said reproducing device at least at said trigger time or subsequently
wherein said web server comprises multiple feeds corresponding to differing effective buffer time lengths which are formed by respectively adding differing buffer time lengths to said trigger time calculated by said trigger time calculation device,
wherein said buffer time lengths correspond to time for a buffering of a streaming in order to display said sync content on said reproducing device, and are set in the said reproducing device to apply to said sync content,
wherein each of said multiple feeds comprises a plurality of display areas in a hierarchy form, which are configured such that a feed item corresponding to a group of data required for a display of sync content is written therein. In the meantime, the aforementioned time point where the time code embedded in the IP stream coincides with a trigger occurrence time is described below.

The above-described sync content broadcast distribution system is distinct from that of patent document 2 in that it provides a trigger time computation device for calculating a time difference between a time indicative of said time code which is read from said IP stream by said decoder and an absolute time and for calculating a trigger time corresponding to said time difference by adding said calculated time difference to a trigger occurrence time of the sync content and said web server is configured for distributing said sync content read from said storage device based on said trigger time calculated by said trigger time computation device to said reproducing device at least at said trigger time or subsequently and said web server comprises multiple feeds corresponding to differing effective buffer time lengths which are formed by respectively adding differing buffer time lengths to said trigger time calculated by said trigger time calculation device, wherein each of said multiple feeds comprises a plurality of display areas in a hierarchy form, which are configured such that a feed item corresponding to a single data among a group of data required for a display of sync content is written therein.

It is preferable that in the sync content broadcast distribution system according to the present invention, wherein the reproducing device comprises multiple feeds corresponding to the differing buffer time lengths provided in the web server, wherein when a specific buffer time length is requested, so that processing of the sync content is executed based on the feed item written to the display area of the feed corresponding to the specific buffer time length requested.

It is more preferable that in the sync content broadcast distribution system according to the present invention, wherein the reproducing device is configured to read the multiple feeds provided in the web server at fixed time intervals, and also configured to update a corresponding feed in the reproducing device without delay when an update of the feed is executed in the web server, so that processing of the sync content is executed based on the feed item written to the updated feed.

It is preferable that in the sync content broadcast distribution system according to the present invention, wherein the reproducing device comprises an expand function for expanding a display area in a reproducing software of the reproducing device, by reading a feed associated with a feed item for an expand synchro-content display read into the feed, with a trigger of a sync content display, wherein a restriction on the sync content display is removed according to the expand function.

It is further preferable that in the sync content broadcast distribution system according to the present invention, wherein the reproducing device comprises a takeover function for changing a display area in a reproducing software of the reproducing device to a sync content for a fixed time only, by reading a feed associated with a feed item for a takeover synchro-content display read into the feed, with a trigger of a sync content display, wherein a restriction on the sync content display is removed according to the takeover function.

It is preferable that in the sync content broadcast distribution system according to the present invention, wherein the reproducing device comprises a subsequence function for changing a display area in a reproducing software of the reproducing device in a manner of slide-show, in sync with the content of the main part in broadcast program, by reading a feed associated with a feed item for a subsequence synchro-content display read into the feed, with a trigger of a sync content display, wherein a restriction on the sync content display is removed according to the subsequence function.

### Effect of the present invention

In order to further increase an advertising effectiveness, the sync content broadcast distribution system of the present invention is able to synchronize to a commercial being broadcast, and to show an online web page and an application on a display in a slide-show fashion, for example.

Using the sync content broadcast distribution system of the present invention, not only for advertising media (an on-air commercial), but also for a program, a new media can be developed in which a broadcast program and an online content are combined.

### Brief Description of Drawings

Fig. 1 is a schematic block diagram showing a schematic configuration of a first embodiment of the sync content broadcast distribution system according to the present invention;
Fig. 2 is a schematic flow chart for explaining the operation of the sync content broadcast distribution system in Fig. 1;
Fig. 3 is a diagram for explaining a method of adjusting a delay on the distribution side according to the sync content broadcast distribution system in Fig. 1;
Fig. 4 is a diagram for explaining a method of adjusting a delay on the reproducing device (the reproducing software) side according to the sync content broadcast distribution system in Fig. 1;
Fig. 5 is a diagram for explaining a buffering function using a feed according to the sync content broadcast distribution system in Fig. 1;
Fig. 6 is a diagram for explaining an expansion function of the sync content broadcast distribution system in Fig. 1;
Fig. 7 is a diagram for explaining a takeover function of the sync content broadcast distribution system in Fig. 1;
Fig. 8 is a schematic block diagram showing a schematic configuration of a second embodiment of the sync content broadcast distribution system according to the present invention;
Fig. 9 is a schematic block diagram showing a schematic configuration of a third embodiment of the sync content broadcast distribution system according to the present invention; and
Fig. 10 is a schematic block diagram showing a schematic configuration of a fourth embodiment of the sync content broadcast distribution system according to the present invention.

### Best Mode for Carrying Out the present invention

The embodiments of the present invention are described in detail below. These embodiments are to be understood as examples, the scope of the invention being defined only by the appended claims.

### Embodiment 1

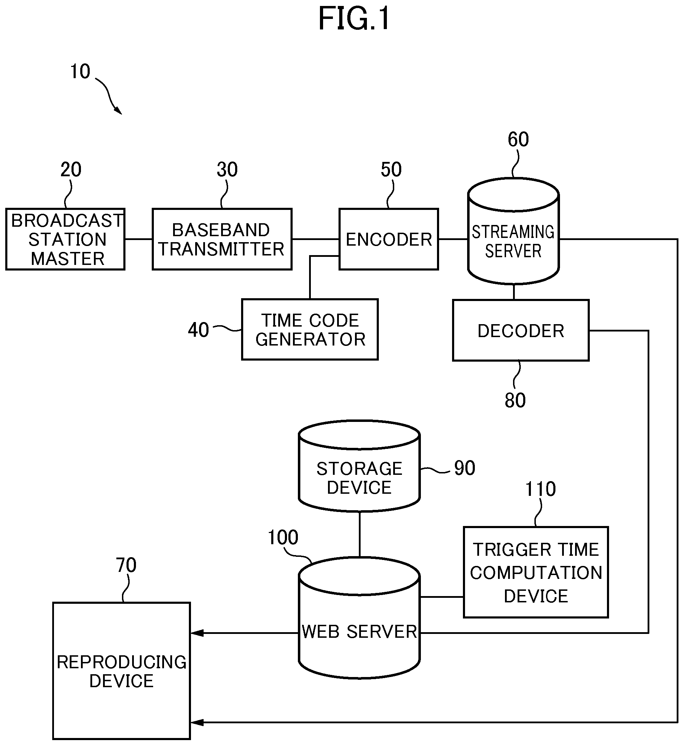

Fig. 1 is a schematic block diagram showing a schematic configuration of a first embodiment of a sync content broadcast distribution system according to the present invention.

In the description below, the terms described as a commercial, an advertisement, an ad, or a CM may be either a main program or a combination of a commercial and a main program, but for simplicity of explanation, these are described simply as a commercial.

Note that in the description below the commercial may be described as an advertisement, an ad, or a CM.

As shown in Fig. 1, a sync content broadcast distribution system 10 in the present embodiment comprises:
a time code generator 40 for producing a time code matched to an absolute time and embedding the time code in a broadcast data output from a broadcast station master 20;
an encoder 50 for encoding the broadcast data in which the time code is embedded, and converting the same to an IP stream;
a streaming server 60 for distributing the IP stream;
a decoder 80 for decoding the IP stream distributed from the streaming server 60 and reading out the time code embedded in the IP stream;
a web server 100 for reading a sync content from storage device 90, which stores one, two, or more sync contents, and distributing said read sync content; and
a reproducing device 70 for receiving the IP stream from the streaming server 60 and the sync content distributed from the web server 100;
whereby the web server 100 is configured to execute a processing of the sync content to the reproducing device 70 at the time point where the time code embedded in the IP stream coincides with the time of occurrence of a sync content trigger.

Herein, the processing of sync content means the execution of feed item written to the feed display area described below; one such example is processing to display the sync content on the reproducing device 70.

In addition, the decoder 80 comprises a trigger time computation device 110 for calculating the time difference TD_{MIN} between the time code read in from the IP stream and absolute time, and adding the calculated time difference TD_{MIN} to the sync content trigger occurrence time T to calculate a trigger time TD_{MIN} + T corresponding to the time difference. In other words, herein the time difference TD_{MIN} refers to something which expresses the time difference between the distribution of sync content and the display of the sync content if no consideration is given to the delay time (the delay time relative to the processing) set by the reproducing device 70 or inherent in the reproducing device 70.

The web server 100 is configured to cause the reproducing device 70 to process the sync content read-out from the storage device 90 at the time point where the time code embedded in the IP stream coincides with the time of occurrence of the sync content trigger, based on the time difference TD_{MIN} + T calculated by the trigger time computation device 110 (i.e., taking into account the time difference TD_{MIN} + T). An example of the processing executed by the web server 100 in the present embodiment is to distribute the sync content read-out from the storage device 90 to the reproducing device 70, and to make the reproducing device 70 to display the sync content on the reproducing software RS of the reproducing device 70.

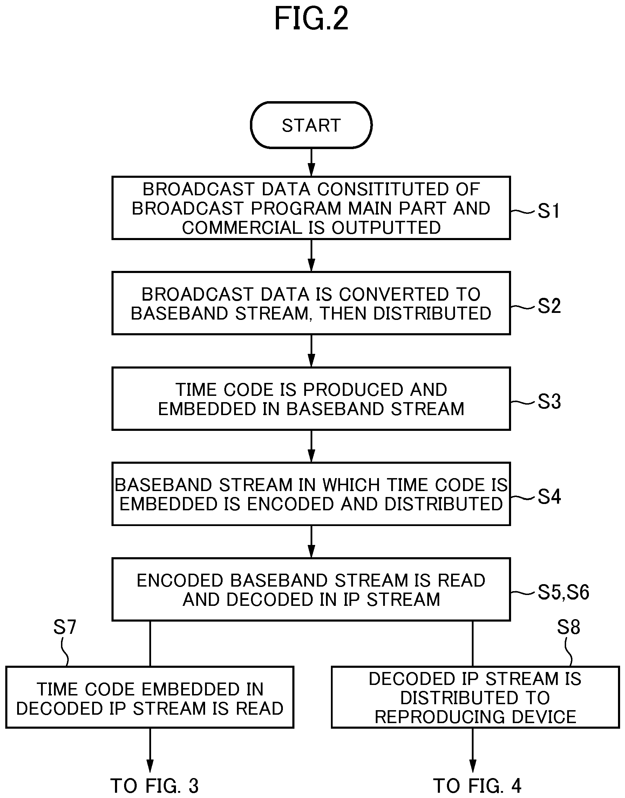

In the followings, referring to the flow chart shown in Fig. 2, the operation of the sync content broadcast distribution system 10 shown in Fig. 1 is described in detail, based on the functions and operations of the aforementioned constituent elements.

In the present embodiment, as shown in Table 1, a commercial is comprised of a 10 digit CM shared code specifying the commercial material, and a 4 digit sync content code specifying the sync content associated with the CM. For example, a radio commercial for Rakuen Insurance and a sync content (showing the detailed content of the radio commercial) linked to such radio commercial are respectively expressed by the following codes:

**[Table 1]**

| | |
|---|---|
| CM shared code: | Rakuen Insurance ABCD000001 |
| Sync content code: | Rakuen Insurance ABCD000001-S001 |

Herein, S001 described in the sync content code shows that this is the first sync content to link to the Rakuen Insurance commercial shown by the CM shared code ABCD000001.

In the present embodiment, the aforementioned CM shared code and the aforementioned sync content code are numbered by a code control center (not shown), however, the present invention is not limited thereto, and the numbering may be executed by the various methods.

First, the broadcast station master 20 outputs the broadcast data comprising: a main program; and a commercial constituted of a video and/or an audio, and numbered with the common code and the sync content code (step S1).

Then, the baseband transmission device 30 inputs the broadcast data outputted from the broadcast station master 20 to convert it to a baseband stream, and distributes the converted baseband stream (step S2).

The time code generator 40 produces a time code (e.g., an SMPTE time Code) for the baseband distributed from the baseband transmission device 30, and embeds the produced time code in the baseband stream (step S3).

As an example of the time code, the one for the sync content code of the aforementioned Rakuen Insurance is shown in Table 2.

**[Table 2]**

| | | |
|---|---|---|
| ABCD000001-S001 | 19:30:00 | 00:01:00 |

In the string of numbers shown in Table 2, the time code is the number string expressed as,

| | |
|---|---|
| 19:30:00 | 00:01:00 |

in the parts on the right side of S001.

The content expressed by the aforementioned time code is such that the first sync content (S001) of Rakuen Insurance (ABCD000001) is triggered at 19 o'clock 30 minutes, and is displayed on the display area of the reproducing software SR (i.e., the display screen of the reproducing device 70) for 1 minute starting at 19 o'clock 30 minutes.

The encoder 50 encodes the baseband stream in which the time code is embedded by the time code generator 40, and distributes the encoded baseband stream (step S4).

The streaming server 60 reads the baseband stream distributed from encoder 50 (step S5).

The decoder 80 decodes the baseband stream read by the streaming server 60 into an IP stream (step S6).

The decoder 80 also reads the time code embedded in the decoded IP stream by using a time code reading function (step S7).

The streaming server 60 distributes the IP stream coded by the decoder 80 to the reproducing device 70 (step S8).

### (A) An adjustment of a delay on a distribution side

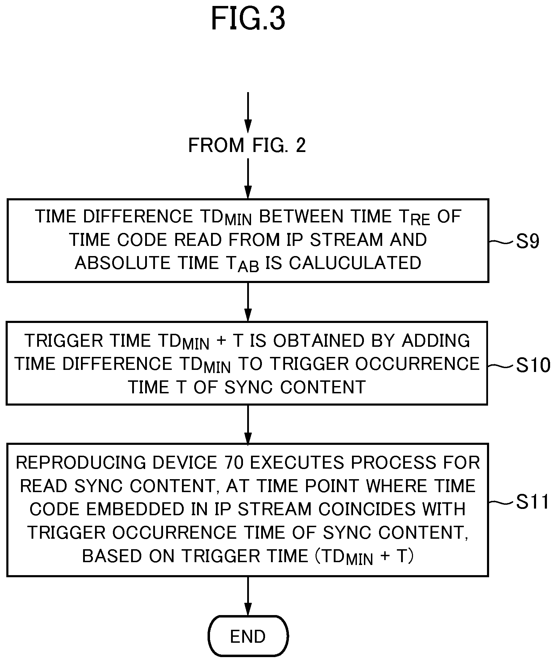

Referring to Fig. 3, an adjustment of a delay on a distribution side is described.
(i) The trigger time computation device 110 calculates the time difference TD_{MIN} between the time code T_{RE} read by the decoder 80 from the IP stream and the absolute time T_{AB} (i.e., the time difference between the distribution of sync content and the display of said sync content) (step S9), and adds the calculated time difference TD_{MIN} to a trigger occurrence time T of a sync content in order to obtain a trigger time TD_{MIN} + T (step S10).
(ii) The web server 100 causes the reproducing device 70 to execute the processing on the sync content read out from the storage device 90 at the time point where the time code embedded in the IP stream coincides with the trigger occurrence time of the sync content, based on the time difference TD_{MIN} + T calculated by the trigger time computation device 110 (i.e., taking into account the time difference TD_{MIN} + T) (step S11).

In the present embodiment, as an example of the processing to be executed by the web server 100, the sync content read from the storage device 90 is distributed to the reproducing device 70, and causing the reproducing device 70 to display the sync content on the reproducing software RS of the reproducing device 70. An additional processing is discussed below.

In the present invention, the delay of sync content on the distribution side is adjusted by the above-described method, i.e., based on the trigger time TD_{MIN} calculated by the trigger time computation device 110.

### (B) An adjustment of a delay on the reproducing software RS side of the reproducing device 70

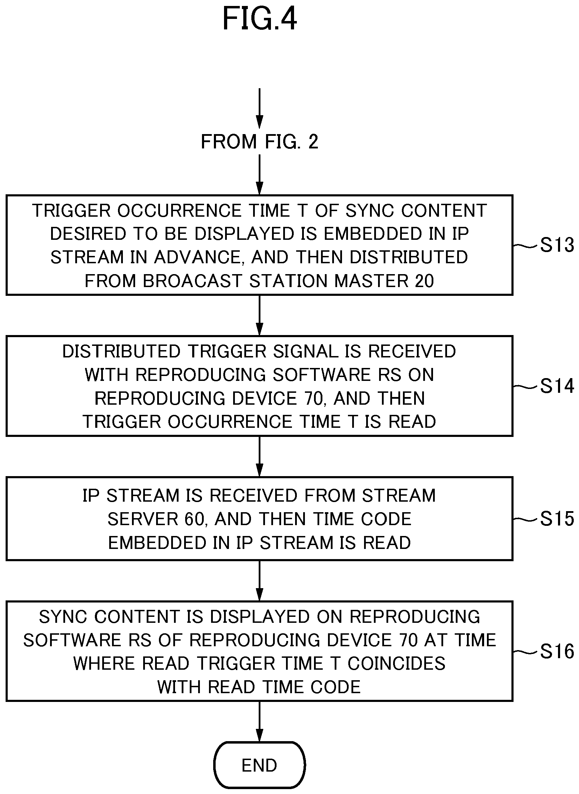

Referring to Fig. 4, an adjustment of a delay on the reproducing software RS side of the reproducing device 70 is described.
(i) The trigger occurrence time T for the sync content which is desired to display is embedded in the IP stream in advance, and the IP stream is distributed from the broadcast station master 20 (hereinafter, the IP stream in which the trigger occurrence time is pre-embedded is referred as the trigger signal for convenience) (step S13).

**[Table 3]**

| An example of trigger signal: | | |
|---|---|---|
| ABCD000001-S001 | 19:30:00 | 00:01:00 |

The meaning of the aforementioned trigger signal is that the first sync content (S001) of Rakuen Insurance (ABCD000001) is displayed for 1 minute (00:01:00) from 19 o'clock 30 minutes (19:30:00 = trigger occurrence time T).
(ii) The distributed trigger signal is received with the reproducing software RS (e.g., the display client software) of the reproducing device 70 (e.g., IP simultaneous radio) which is switched on, and the trigger occurrence time T is read (step S14).
(iii) Meanwhile the IP stream distributed from the streaming server 60 in the aforementioned step S7 is received, and the time code embedded in the IP stream is read (step S15).
(iv) At the time point where the trigger occurrence time T read in the aforementioned step S12 coincides with the time indicated in the time code read in the aforementioned step S13 (this will be described below), the sync content (in the example above, the sync content of Rakuen Insurance) is displayed on the reproducing software RS of the reproducing device 70 (on the display screen of the reproducing device 70) (step S16).

Herein, "at the time point where the trigger occurrence time T coincides with the time indicated in the time code" is described.

For ease of explanation, it is assumed that the trigger signal indicating the trigger occurrence time T is distributed to the reproducing device 70 without a delay.

In an example of the aforementioned trigger signal:

| | | |
|---|---|---|
| ABCD000001-S001 | 19:30:00 | 00:01:00 |

19:30:00 indicates the trigger occurrence time T.

On the other hand, a delayed IP stream has been distributed to the web server 100. The degree of such delay is expressed as the time difference TD_{MIN} between the time code time T_{RE} read from the IP stream by decoder 80 and the absolute time T_{AB} (i.e., the time difference between the distribution of the sync content and the display of said sync content).

Stated differently, in the web server 100, the receive IP stream time code is substantially delayed (offset) more than the displayed value thereof by the time equal to this time difference TD_{MIN}.

For example, if the time difference TD_{MIN} would be 5 seconds, then the displayed value 19:30:00 (trigger occurrence time T) of the time code in the received IP stream is 5 seconds offset (delayed) with respect to the absolute time, and therefore 19:30:05 (with respect to the absolute time) becomes an actual trigger occurrence time T'. At the time point of the absolute time 19:30:00, the reproducing device 70 is broadcasting the broadcast content for 19:29:55 (vs. the absolute time), and if the sync content such as a CM would be inserted into the broadcasting at this time point (i.e., if the CM trigger would be occurred), then, while a user is listening to the IP simulcast radio (which is broadcasting the music) by utilizing the reproducing device 70, the music is suddenly interrupted in the middle of broadcasting the music and becomes the state where the CM broadcast is playing (i.e., the CM broadcast overlaps).

In other words, "at the time point where the trigger occurrence time T coincides with the time T_{TC} indicated by the time code" means "the time of matching" the actual trigger occurrence time T' with the shifted time code time T'_{TC} (the apparent time code time) relative to the absolute time, and thus in the aforementioned example, 19:30:05 expresses "the time of matching". That is, the processing of the sync content (the processing corresponding to the time code T_{TC} = 19:30:00) is triggered by the web server 100 at 19:30:05 in the absolute time. Since this is similarly reflected in the subsequent processing, all processing is executed at the delay of 5 seconds in the reproducing device 70.

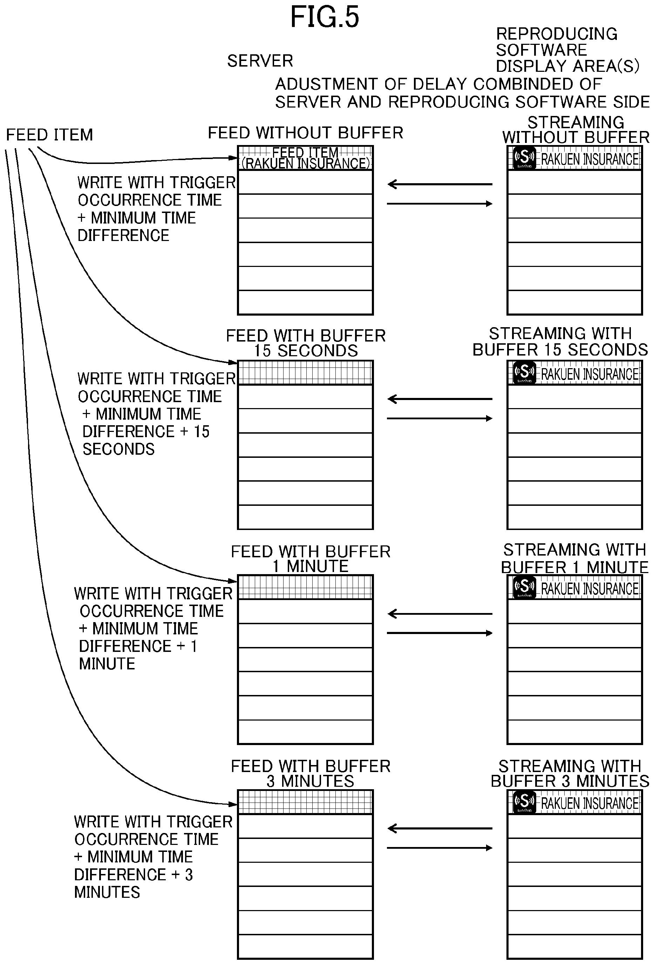

Next, referring to Fig. 5, the step (step S16) at which the sync content is displayed on the reproducing software RS of the reproducing device 70 is described, based on the aforementioned time difference TD_{MIN} (i.e., the trigger time TD_{MIN} + T).

The reproducing software RS of the reproducing device 70 has the function which is capable of setting the buffer time of the streaming. In the present embodiment, the reproducing software RS of the reproducing device 70 is assumed to be configurable to select any buffer time from among 0 seconds, 15 seconds, 30 seconds, 1 minute, or 3 minutes, however, the buffer time is not limited to these, and can be set to any desired time interval.

The data set required for the display of the sync content is referred to as the feed item. Such feed item (i.e., the data set) is comprised of an URL, a display text (text), a command, a beacon for statistical log, etc.

The function for storing the multiple feed items is specifically referred to as a feed for buffer time.

The web server 100 is provided with the multiple feeds corresponding to the differing effective buffer lengths (e.g., TD_{MIN} + T + 0 seconds, TD_{MIN} + T + 15 seconds, TD_{MIN} + T + 30 seconds) formed by respectively adding the differing buffer time lengths (e.g., 0 seconds, 15 seconds, 30 seconds) to the trigger times TD_{MIN} + T calculated by the trigger time computation device 110 in response to the buffer times set by the reproducing device 70. Each of the respective multiple feeds has the hierarchical multiple display areas configured to write the feed item associated with a single data in the data set required for the display of the sync content.

On the other hand, the reproducing device 70 comprises the multiple feeds corresponding to the differing buffer time lengths with which the web server 100 is provided, and is configured to operate based on the feed item written to the display area of the feed corresponding to the requested specific buffer time length, when the specific buffer time length (e.g., 30 seconds) is requested, thereby enabling to display the sync content on the reproducing device in the state where there is no delay substantially.

The reproducing device 70 is also configured to read the multiple feeds provided in the web server 100 at the fixed time intervals, and when an updating of the feed is executed in the web server 100, the feed corresponding to said reproducing device 70 is updated without delay, thereby operating based on the feed item written to said updated feed.

In the followings, the aforementioned buffering method is described in a concrete manner.

As an example, a case where a single reproducing device 70A has a buffer time length of 0 seconds, and a different reproducing device 70B has a buffer time length of 30 seconds is described.

Similar to the above described example, in an example of the trigger signal of:

| | | |
|---|---|---|
| ABCD000001-S001 | 19:30:00 | 00:01:00 |

19:30:00 indicates the trigger occurrence time T.

On the other hand, a delayed IP stream is distributed to the web server 100. The degree of such delay is expressed as the time difference TD_{MIN} between the time code time T_{RE} read-out from the IP stream by the decoder 80 and the absolute time T_{AB} (i.e., the time difference between the distribution of the sync content and the display of said sync content).

Stated differently, in the web server 100, the time code of the received IP stream is substantially delayed (offset) more than the display value by the time equal to this time difference TD_{MIN}.

For example, if the time difference TD_{MIN} would be 5 seconds, then the display value 19:30:00 (the trigger occurrence time T) of the time code in the received IP stream is offset (delayed) by 5 seconds from the absolute time, and therefore 19:30:05 is the actual trigger occurrence time T' (relative to the absolute time).
(1) In the case where the reproducing device 70A has a 0 seconds buffer time length, at the absolute time of:
   19:30:00
      the signal (IP stream) which should be received at the absolute time of
   19:25:55
      is substantially received at the present time.

At this time point, the reproducing device 70A requires a buffering time of 0 seconds. This results in waiting for the IP stream to be received 0 seconds later.

That is, in the absolute time:
19:30:00.
   no trigger occurs until reaching the absolute time. In other words, the consideration is given to the fact that the trigger time TD_{MIN} + T = 19:30:05, and no trigger actually occurs in the reproducing device 70A until reaching
19:30:05
   in the absolute time.

That is, at the time of
19:30:05
   in the absolute time, the multiple feeds corresponding to the effective buffer time length (TD_{MIN} (= 5 seconds) + T + 0 seconds) are read out, and the processing is executed according to the feed item written to the highest order feed (display area). Herein, since the feed item is written as the specific URL, the written URL is accessed and the Rakuen Insurance CM is to be broadcasted for 1 minute.
00:01 :00

The aforementioned time indicates that the CM is to be broadcasted for 1 minute.
(2) In the case where the reproducing device 70B has a 30 second buffer time length, at the absolute time:
19:30:00,
   the signal (IP stream) which should be received at the time point of
19:29:25
   where there is a delay of 5 + 30 seconds = 35 seconds relative to the absolute time, is substantially received at the present time.

At this time point, the reproducing device 70B requires the buffering time of 35 seconds. This results in waiting for the IP stream to be received 35 seconds later.

That is, this results in waiting for the IP stream to be received 35 seconds later in the absolute time.

That is, in the absolute time of
19:30:35.
no trigger occurs until reaching it. In other words, the consideration is given to the trigger time TD_{MIN} + T = 19:30:05 and the buffer time 30 seconds of the reproducing device 70B, and until reaching
19:30:35
in the absolute time, no trigger occurs.
That is, at the time of
19:30:35
in the absolute time, the multiple feeds corresponding to the effective buffer time length (TD_{MIN} (=5 seconds) + 19:30:00 + 30 seconds) is read, and the processing is executed according to the feed item written to the highest order feed (display area). Herein, since the feed item is written as the specific URL, the written URL is accessed and the Rakuen Insurance CM is broadcasted for 1 minute.
00:01:00

The aforementioned time indicates that the CM is to be broadcast for 1 minute.

Configuring as described above, even if the absolute times differ between the reproducing devices 70A and 70B, no "offset" occurs between the display of the main program and the display of sync content in the respective reproducing devices 70A and 70B, when accessing the sync content, i.e., when the sync contents are respectively displayed on the respective display software of the reproducing devices 70A and 70B.

### (C) Method for Removing limitations On Sync Display(s)

### (i) Expand

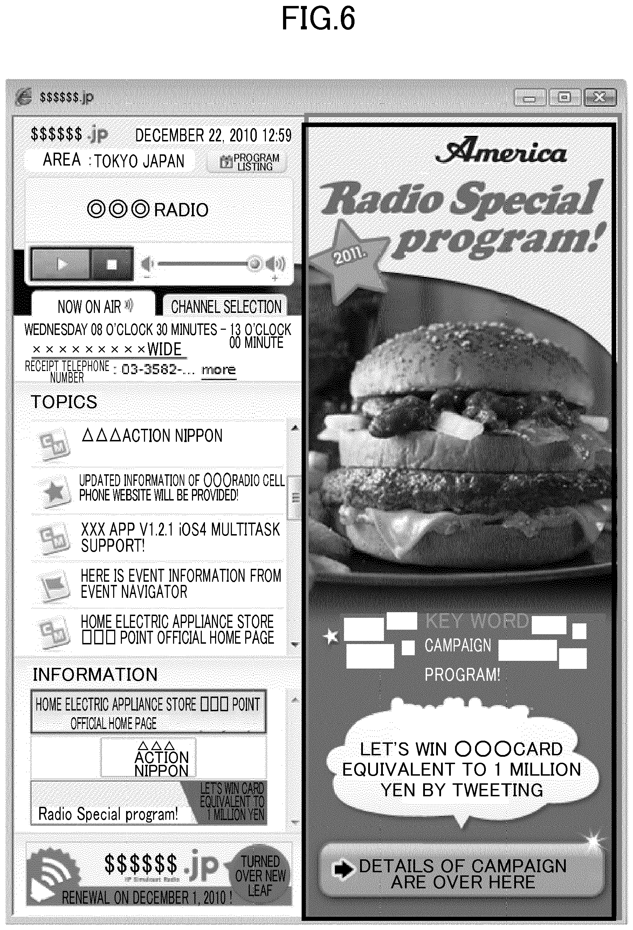

Fig. 6 is a diagram explaining a function of expanding by the sync content broadcast distribution system of Fig. 1.

Normally, in the reproducing device, because the display area for the timeline of the reproducing software is small, there is a limitation on a sync display(s) such that only something on the level of simple icon and text can be displayed in the display area. Thus, in order to remove such limitations on the sync display, in the present invention, the reproducing software RS of the reproducing device 70 is provided with a function of expanding for enlarging the display area (a part or all of the display screen on reproducing device 70) in the reproducing software RS of the reproducing device 70, by a trigger of the sync content display. As a result thereof, an expressive power at the display area in the reproducing software RS of the reproducing device 70 is greatly strengthened, and an expression similar to the normal website can be implemented by expanding said display area.

In the streaming server 60, the reproducing software and the file described in XML, etc. of the expansion sync content type reproduction software are prepared. When the feed item for expanded sync content display is written to the feed (for example, at the highest order of the feed) and the file associated with the feed item is read on the reproducing software RS side, it is configured that the reproducing player RP expands.

As shown in Fig. 6, normally only the reproducing player on the left side is displayed, and the expanded portion on the right side, i.e., the ad portion is not displayed. Herein, by using the above-described function of expanding, it becomes possible to display the expanded portion of the right side, i.e., the ad portion.

As the expression area enlarging in such manner, it makes possible to coordinate with a text, a still picture, a movie, a twitter, and the like. In other words, doing mash ups on the sync content area by utilizing an API (application programming interface) of which the social media releases to the public, for example, it makes possible to encode the timeline of the twitter for the hash tag of such program.

It is configured to return to the original reproducing software, when a certain display time is set from the trigger of sync content display and the set display time is expired or elapsed (this is different in principle from the configuration in which an expand content is simply expanded for a fixed time). This is implemented by writing a command to be read in the normal reproducing software at a designated time to the feed item written to the feed.

**[Table 4]**

| | |
|---|---|
| An example: ABCD000001-S001 | 19:30:00 ex 00:01:00 |

The meaning of the above-mentioned code is that the "sync content" of "Rakuen Insurance" is displayed for 1 minute starting at 19 o'clock 30 minutes.

### (ii) Takeover

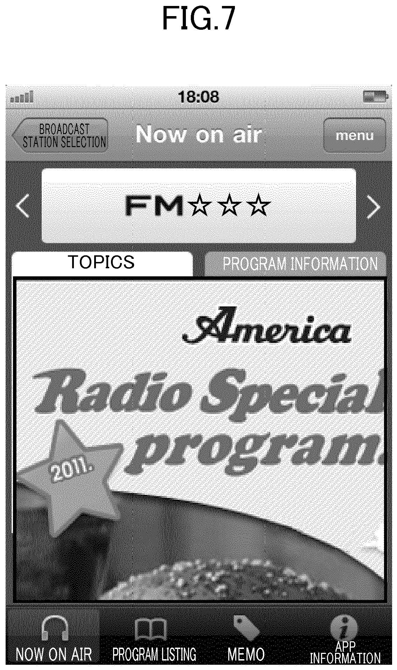

Fig. 7 is a diagram for explaining the function of takeover in the sync content broadcast distribution system shown Fig. 1, this is primarily implemented in a mobile reproducing device such as a smart phone.

For the reproducing device such as the smart phone without the ability to expand the display area in the reproducing software, the function (takeover function) by which the part displaying the program-related information such as the "now on air" changes to the sync content for the fixed time only is provided in the reproducing software SR of the reproducing device 70. The takeover function is implemented by exactly the same method in principle as the above-described expand. When the designated fixed time has elapsed, it returns to the original reproducing software SR in the same manner as the expanding.

### (iii) Subsequence

The subsequence function according to the sync content broadcast distribution system shown in Fig. 1 is described.

The function (the subsequence function) by which the subsequence is started after the trigger, and further the pages are changed in a slide-show fashion in sync with the content of the main program, is provided in the reproducing software SR of the reproducing device 70, with regard to the aforementioned expansion or takeover portions (the portions displaying the main program related information).

The sync content corresponding to the subsequence (the subsequence corresponding sync content) are constituted of a book (Book) form consisting of multiple pages, and are buffered on the reproducing software SR side at the time of trigger. This buffering has been described above, and thus the explanation thereof is omitted herein.

The changes to the pages after the trigger are implemented based on the schedule which is in synchronized with the content of audio or video commercial.

For example, in the case where there is the sync content constituting of 4 pages corresponding to the commercial of Rakuen Insurance for 1 minute, and where the first page starts at 19:30 (the startup time of the reproducing software), the second page is displayed at 15 seconds later, the third page is displayed at 40 seconds later, and the fourth page is displayed at 50 seconds later over 1 minute (expiration time 00:01:50), the sync content can be displayed on the display area in the reproducing software SR of the reproducing device 70 by setting the schedule as shown below:

| | |
|---|---|
| An Example: ABCD000001-S001-SQ001 | 19:30:00 (trigger) |

| Start of subsequence: | |
|---|---|
| ABCD000001-S001-SQ001 | 00:00:00 (display page 1) |
| ABCD000001-S001-SQ002 | 00:00:15 (display page 2) |
| ABCD000001-S001-SQ003 | 00:00:40 (display page 3) |
| ABCD000001-S001-SQ004 | 00:00:50 (display page 4) ex 00:01:50 |

In the embodiment discussed above, it is configured to execute the trigger occurrence based on the trigger occurrence time code embedded in the IP stream, but the trigger occurrence method according to the present invention is not limited thereto. For example, other methods such as a watermark, a fingerprint, a time stamp, and the like may also be used.

The present invention, by constituting as described above, synchronizes the sync content with the on-air main program and/or the commercial, and displays the web page, the application, and the like on the display of the reproducing device 70 by a simple and quick method, without producing "offsets", even if the delay would occur between the on-air commercial or main program and the webpage or application, etc., and is capable of displaying, by executing the expand, the takeover, or the subsequence of the display area for web page, application, and the like, on the display screen in reproducing device 70.

### Embodiment 2

In the first embodiment described above, the configuration for eliminating the "offsets" in the contents distributed in the processing steps up until the distributed content is displayed on the display screen of the reproducing device 70, primarily by the constituent elements other than the reproducing device 70.

In the embodiment 2, another processing method for eliminating the "offsets" in the distributed contents in the reproducing device 70 as shown in Fig. 1 is described.

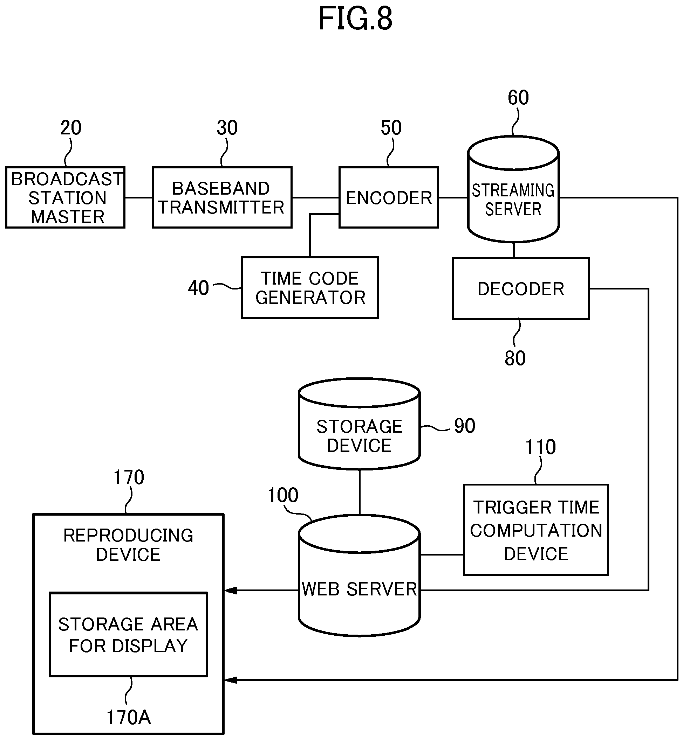

In the embodiment 2, a processing method for eliminating the "offsets" in the distributed contents using a reproducing device 170 (see Fig. 8), the constitution of which is somewhat different from the reproducing device 70 shown in Fig 1.

The processing method according to the present embodiment is applied to the case where the feed item (for example, the sync content of the Rakuen Insurance CM) is added in the feed of the web server 100 (on the server side) at the time of the trigger occurrence.

Then, the specific processing contents are described below.

In the web server 100 (on the server side), the feed items are added, changed, or deleted to the feed at any time.

In the reproducing device 170 (on the client side),
(1) A feed is periodically acquired from the web server 100.
(2) After the feed acquisition, a feed item difference (the newly added sync content part) is extracted.
(3) Two types of the feeds, i.e., the feed for acquisition and the feed for display are provided.
(4) Following the elapse of the audio and/or video buffer time set at will by the user + the fixed value (the estimated audio and/or video delay time), the feed item difference is added, changed, or deleted from the feed for display prepared in the storage area (the display storage area) 170Aof the reproducing device 170.
(5) The reproducing device 170 periodically reads in the feed for display and immediately displays the read-in feed on the display screen of the reproducing device 170.

That is, the processing method of the embodiment 2 separately provides the feed for display on the reproducing device 170, and the reproducing device 170 simply periodically reads the feed for display or executes the processing of displaying, and causes the timing at which the feed for display is written to be delayed by the amount of the buffer time (audio and/or video buffer time + fixed value).

### Embodiment 3

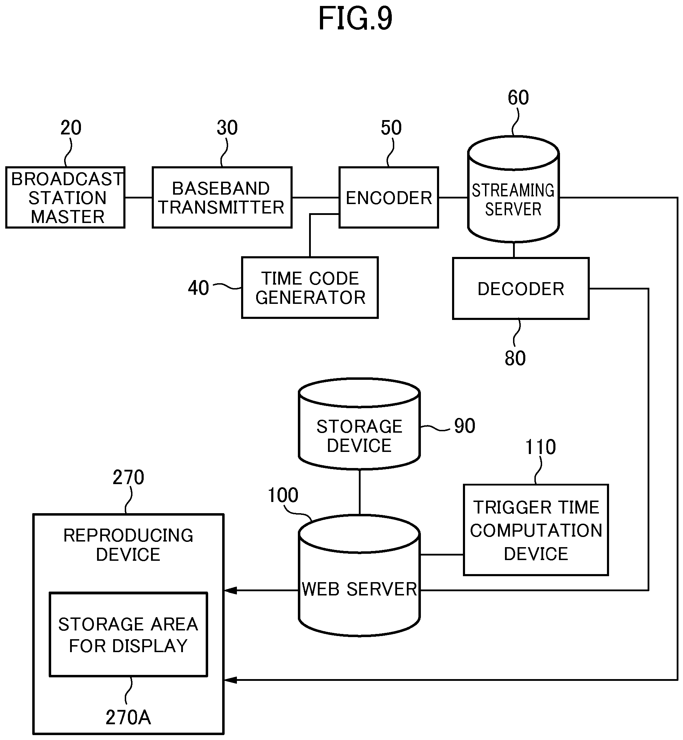

In the embodiment 3, another processing method for eliminating the "offset" in the distributed contents in a reproducing device 270 shown in Fig. 9, in a similar manner as the above-described Embodiment 2, is described.

In the processing method of the present embodiment, a high precision synchronization is implemented by referring to a time stamp embedded in an audio and/or video stream.

In the web server 100,
(1) At any time, the feed item is added, changed, or deleted from the feed.
(2) At such times, the absolute time at which the addition, the change, or the deletion is to be performed is recorded by the web server 100 for each feed item. For example, the case in which the trigger for Rakuen Insurance CM sync content occurs at 19:30:00, as the trigger occurrence time, etc.

In the reproducing device 270,
(1) Two types of feeds, the feed for acquisition and the feed for display are provided.
(2) A feed is periodically acquired from the web server 100.
(3) After the feed acquisition, a feed item difference (the newly added sync content part) is extracted.
(4) The feed item difference is added, changed, or deleted from the feed for display prepared in the storage area 270A of the reproducing device 270 at the time when, the absolute time described at the time when the feed item is produced on the web server 100 + audio and/or video buffer time + a fixed value, are added together.
(5) The reproducing device 270 periodically reads the feed for display, and immediately displays the read-in feed on the display screen of the reproducing device 270.

That is, the processing method in the embodiment 3 is configured to record the absolute time for every feed item, and control by adding the buffer times, so as to also respond to the delay(s) of receiving the feeds from the web server 100 by the reproducing device 270.

### Embodiment 4

In the embodiments 2 and 3 described above, the processing methods, which are different from one another, for eliminating the "offsets" in the distributed content using the reproducing device 70 shown in Fig. 1 are described respectively.

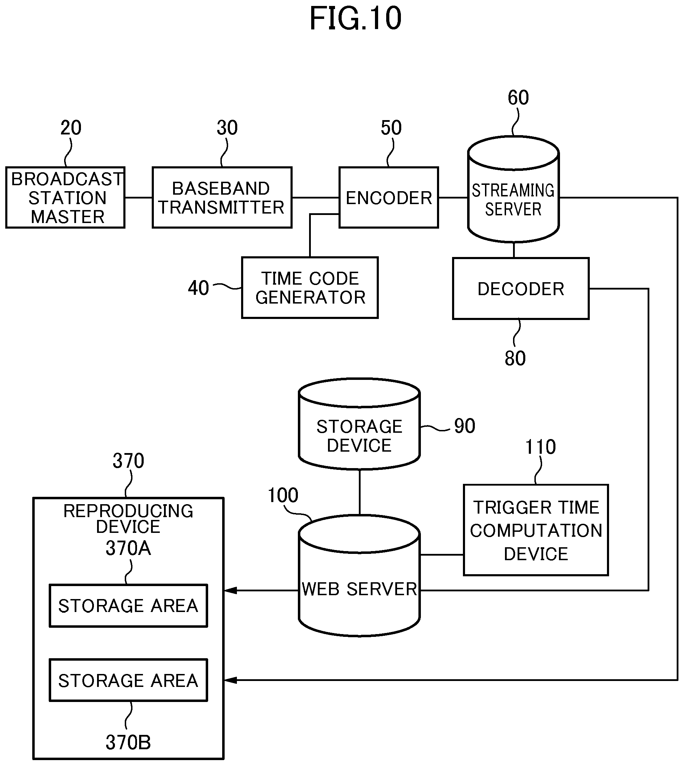

In the embodiment 4, a processing method for eliminating the "offset" in the distributed content using a reproducing device 370 (see Fig. 10) whose constitution differs from the ones of the reproducing devices 70, 170, and 270 respectively shown in Figs. 1, 8, and 9, is described. That is, the embodiment 4 explains a processing method for eliminating the offset caused by the audio and/or video delay(s).

Note that the constitution in the embodiment 4 is the same as that of Fig. 1, except that the reproducing device 70 is changed to the reproducing device 370.

In addition, the processing method in the aforementioned embodiment 3 should be referred to, with respect to the sync content.

In the web server 100,
(1) with respect to the audio and/or video, it is converting to a file with a fixed unit size (e.g., 1 second) on the web server 100, and the absolute time information is written to the header and the like of the respective files (i.e., the time stamps are implemented).

In the reproducing device 370,
(1) the audio and/or video is written from the storage area 370A for the feed for acquisition to the storage area 370B for the feed for display, and displayed, at the time point where the trigger time written to the feed item coincides with the time stamp of the distributed audio and/or video file,
(2) the storage areas 370A and 370B are provided in the reproducing device 370 for two types of feeds which are the feed for acquisition and the feed for display.

Herein, the aforementioned "converting to a file" is meant to be a protocol for transmitting a file itself in the HTTP communication system, and as the examples thereof there are HLS (HTTP Live Streaming), HDS (HTTP Dynamic Streaming) of Adobe, and the like.

As shown in the above-described embodiments 2 through 4, according to the sync content broadcast distribution system of the present invention, the "offset" in the distributed content can be eliminated, without using any complicated mechanism or program, in the reproducing device.

### Industrial Applicability

The sync content broadcast distribution system of the present invention can easily eliminate the "offset" in the distributed content, in the processing steps up to the point where the distributed content is displayed on the display screen of the reproducing device, and therefore it can be used for the sync content broadcast distribution in a mobile terminal device such as a smart phone and a pager.

## Claims

1. A sync content broadcast distribution system for synchronizing a sync content to an IP streamed broadcast data, comprising:
a time code generator for producing a time code matched to an absolute time and embedding said time code in a broadcast data outputted from a broadcast station master;
an encoder for encoding said broadcast data in which said time code is embedded and converting said encoded broadcast data to an IP stream;
a streaming server for distributing said IP stream;
a decoder for decoding said IP stream distributed from said streaming server and reading said time code embedded in said IP stream;
a web server for reading sync content from a storage device storing at least one, two, or more sync contents and distributing said sync content;
a reproducing device for receiving said IP stream distributed from said streaming server and said sync content distributed from said web server; and
a trigger time computation device for calculating a time difference between a time indicative of said time code which is read from said IP stream by said decoder and an absolute time and for calculating a trigger time corresponding to said time difference by adding said calculated time difference to a trigger occurrence time of the sync content
wherein said web server is configured to distribute said sync content to said reproducing device in order to make said reproducing device to execute a processing on said sync content at a time point where said time code embedded in said IP stream coincides with the trigger occurrence time of sync content received from said web server,
wherein said web server is configured for distributing said sync content read from said storage device based on said trigger time calculated by said trigger time computation device to said reproducing device at least at said trigger time or subsequently
wherein said web server comprises multiple feeds corresponding to differing effective buffer time lengths which are formed by respectively adding differing buffer time lengths to said trigger time calculated by said trigger time calculation device,
wherein said buffer time lengths correspond to time for a buffering of a streaming in order to display said sync content on said reproducing device, and are set in the said reproducing device to apply to said sync content,
wherein each of said multiple feeds comprises a plurality of display areas in a hierarchy form, which are configured such that a feed item corresponding to a group of data required for a display of sync content is written therein.

2. A sync content broadcast distribution system according to claim 1, wherein said reproducing device comprises multiple feeds corresponding to said differing buffer time lengths provided in said web server, wherein when a specific buffer time length is requested, so that processing of the sync content is executed based on the feed item written to the display area of the feed corresponding to said specific buffer time length requested.

3. A sync content broadcast distribution system according to either claim 1 or claim 2, wherein said reproducing device is configured to read said multiple feeds provided in said web server at fixed time intervals, and also configured to update a corresponding feed in said reproducing device without delay when an update of said feed is executed in said web server, so that processing of the sync content is executed based on the feed item written to said updated feed.

4. A sync content broadcast distribution system according to any one of claims 1 to 3, wherein said reproducing device comprises an expand function for expanding a display area in a reproducing software of said reproducing device, by reading a feed associated with a feed item for an expand sync content display read into said feed, with a trigger of a sync content display, wherein a restriction on said sync content display is removed according to said expand function.

5. A sync content broadcast distribution system according to any one of claims 1 to 4, wherein said reproducing device comprises a takeover function for changing a display area in a reproducing software of said reproducing device to a sync content for a fixed time only, by reading a feed associated with a feed item for a takeover sync content display read into said feed, with a trigger of a sync content display, wherein a restriction on said sync content display is removed according to said takeover function.

6. A sync content broadcast distribution system according to any one of claims 1 to 5, wherein said reproducing device comprises a subsequence function for changing a display area in a reproducing software of said reproducing device in a manner of slide-show, in sync with the content of the main part in broadcast program, by reading a feed associated with a feed item for a subsequence sync content display read into said feed, with a trigger of a sync content display, wherein a restriction on said sync content display is removed according to said subsequence function.

## Patentansprüche

1. Ein Synchronisationsinhalt-*Broadcast*-Verteilungssystem zum Synchronisieren eines Synchronisationsinhalts mit IP-*gestreamten Broadcast*-Daten, das Folgendes umfasst:
einen *Timecode*-Generator, zum Erzeugen eines *Timecodes,* der auf eine absolute Zeit abgestimmt ist, und zum Einbetten des genannten *Timecodes* in von einem *Broadcast*-Stations-Master ausgegebenen *Broadcast*-Daten;
einen Codierer, zum Codieren der genannten *Broadcast*-Daten, in die der *Timecode* eingebettet ist, und zum Umwandeln der genannten codierten *Broadcast-*Daten in einen IP-*Stream*;
einen *Streaming-Server* zum Verteilen des genannten IP-*Streams*;
einen Decoder, zum Decodieren des genannten, vom genannten *Streaming-Server* verteilten IP-*Streams,* und zum Lesen des in den genannten IP-*Stream* eingebetteten genannten *Timecodes*;
einen Webserver zum Lesen von Synchronisationsinhalten ausgehend von einer Speichervorrichtung, die mindestens einen, zwei oder mehr Synchronisationsinhalte speichert, und zum Verteilen des genannten Synchronisationsinhalts;
eine Wiedergabevorrichtung zum Empfangen des genannten, vom genannten *Streaming-Server* verteilten IP-*Streams* und des vom genannten Webserver verteilten Synchronisationsinhalts; und
eine Triggerzeit-Berechnungsvorrichtung zum Berechnen einer Zeitdifferenz zwischen einer Zeit, die den genannten *Timecode* angibt, der vom genannten Decoder aus dem genannten *IP-Stream* gelesen wird, und einer absoluten Zeit, und zum Berechnen einer Triggerzeit, die der genannten Zeitdifferenz entspricht, indem die genannten berechnete Zeitdifferenz zu einer Triggerereignis-Zeit des Synchroninhalts hinzugefügt wird,
wobei der genannte Webserver konfiguriert ist, um den genannten Synchronisationsinhalt an die genannte Wiedergabevorrichtung zu verteilen, um die genannte Wiedergabevorrichtung dazu zu bringen, eine Verarbeitung des genannten Synchronisationsinhalts zu einem Zeitpunkt auszuführen, zu dem der im genannten *IP-Stream* eingebettete genannten *Timecode* mit der Triggerereignis-Zeit des vom genannten Webserver empfangenen Synchronisationsinhalts übereinstimmt,
wobei der genannte Webserver konfiguriert ist, um den genannten Synchronisationsinhalt ausgehend von der genannten Speichervorrichtung, basierend auf der genannten, von der genannten Triggerzeit-Berechnungsvorrichtung berechneten Triggerzeit zumindest zur genannten Triggerzeit oder nachfolgend, an die genannten Wiedergabevorrichtung zu verteilen,
wobei der genannte Webserver mehrere *Feeds* umfasst, die unterschiedlichen effektiven Pufferzeitlängen entsprechen, die durch jeweiliges Hinzufügen unterschiedlicher Pufferzeitlängen zu der von der genannten Triggerzeit-Berechnungsvorrichtung genannten berechneten Triggerzeit gebildet werden,
wobei die genannten Pufferzeitlängen der Zeit für eine Pufferung eines *Streamings* entsprechen, um den genannten Synchronisationsinhalt auf der Wiedergabevorrichtung anzuzeigen, und in der genannten Wiedergabevorrichtung so eingestellt werden, dass sie auf den genannten Synchronisationsinhalt angewendet werden,
wobei jeder der mehreren genannten *Feeds* eine Vielzahl von Anzeigebereichen in einer Hierarchieform umfasst, die so konfiguriert sind, dass darin ein Feed-Element geschrieben wird, das einer Gruppe von Daten entspricht, die für eine Anzeige von Synchronisationsinhalten benötigt werden.

2. Ein Synchronisationsinhalt-*Broadcast*-Verteilungssystem nach Anspruch 1, wobei die genannte Wiedergabevorrichtung mehrere *Feeds* umfasst, die den unterschiedlichen genannten Pufferzeitlängen entsprechen, die im genannten Webserver bereitgestellt werden, wobei, wenn eine bestimmte Pufferzeitlänge angefordert wird, sodass die Verarbeitung des Synchronisationsinhalts basierend auf dem *Feed*-Element ausgeführt wird, das in den Anzeigebereich des *Feeds* geschrieben wird, der der angeforderten genannten spezifischen Pufferzeitlänge entspricht.

3. Ein Synchronisationsinhalt-*Broadcast*-Verteilungssystem nach Anspruch 1 oder Anspruch 2, wobei die genannte Wiedergabevorrichtung konfiguriert ist, um die im genannten Webserver bereitgestellten genannten Mehrfach-*Feeds* in festen Zeitintervallen zu lesen, und auch konfiguriert ist, um einen entsprechenden *Feed* in der genannten Wiedergabevorrichtung ohne Verzögerung zu aktualisieren, wenn eine Aktualisierung des genannten *Feeds* im genannten Webserver ausgeführt wird, sodass die Verarbeitung des Synchronisationsinhalts ausgeführt wird basierend auf dem *Feed*-Element, das in den genannten aktualisierten *Feed* geschrieben wird.

4. Ein Synchronisationsinhalt-*Broadcast*-Verteilungssystem nach irgendeinem der Ansprüche von 1 bis 3, wobei die genannte Wiedergabevorrichtung eine Erweiterungsfunktion (*expand function*) umfasst, zum Erweitern eines Anzeigebereichs in einer Wiedergabesoftware der genannten Wiedergabevorrichtung durch Lesen eines *Feeds,* der einem *Feed*-Element zugeordnet ist für eine in den genannten *Feed* eingelesene Erweiterung des Synchronisationsinhaltsanzeige-Lesevorgangs (*read*) mit einer Triggerung bzw. Auslösung einer Synchronisationsinhaltsanzeige, wobei eine Beschränkung der genannten Synchronisationsinhaltsanzeige gemäß der genannten Erweiterungsfunktion aufgehoben wird.

5. Ein Synchronisationsinhalt-*Broadcast*-Verteilungssystem nach irgendeinem der Ansprüche von 1 bis 4, wobei die genannte Wiedergabevorrichtung eine Übernahmefunktion (*takeover function*) zum Ändern eines Anzeigebereichs in einer Wiedergabesoftware der genannten Wiedergabevorrichtung auf einen Synchronisationsinhalt nur für eine bestimmte Zeit durch Lesen eines *Feeds,* der einem *Feed*-Element zugeordnet ist, für eine Übernahme des Synchronisationsinhaltsanzeige-Lesevorgangs in den genannten *Feed* mit einer Triggerung bzw. Auslösung einer Synchronisationsinhaltsanzeige, wobei eine Beschränkung der genannten Synchronisationsinhaltsanzeige gemäß der genannten Übernahmefunktion aufgehoben wird.

6. Ein Synchronisationsinhalt-*Broadcast*-Verteilungssystem nach irgendeinem der Ansprüche von 1 bis 5, wobei die genannte Wiedergabevorrichtung eine Nachfolgefunktion (*subsequence function*) zum Ändern eines Anzeigebereichs in einer Wiedergabesoftware der genannten Wiedergabevorrichtung in der Art einer Diashow, auf synchronisierte Weise mit dem Inhalt des Hauptteils im Broadcast-Programm, durch Lesen eines *Feeds,* der einem *Feed*-Element zugeordnet ist, für eine Nachfolge des Synchronisationsinhaltsanzeige-Lesevorgangs in den genannten *Feed* mit einer Triggerung bzw. Auslösung einer Synchronisationsinhaltsanzeige, wobei eine Beschränkung der genannten Synchronisationsinhaltsanzeige gemäß der genannten Nachfolgefunktion aufgehoben wird.

## Revendications

1. Système de distribution de radiodiffusion de contenu de synchronisation servant à synchroniser un contenu de synchronisation par rapport à des données de radiodiffusion diffusées en continu selon un protocole IP, comportant :
un générateur de code temporel servant à produire un code temporel mis en correspondance par rapport à un temps absolu et servant à intégrer ledit code temporel dans des données de radiodiffusion qui sont émises en sortie en provenance d'une partie maîtresse de station de radiodiffusion ;
un codeur servant à coder lesdites données de radiodiffusion dans lesquelles ledit code temporel est intégré et servant à convertir lesdites données de radiodiffusion codées en un flux de données IP ;
un serveur de diffusion en continu servant à distribuer ledit flux de données IP ;
un décodeur servant à décoder ledit flux de données IP distribué en provenance dudit serveur de diffusion en continu et servant à lire ledit code temporel intégré dans ledit flux de données IP ;
un serveur Web servant à lire le contenu de synchronisation en provenance d'un dispositif de stockage stockant au moins un, deux, ou plusieurs contenus de synchronisation et servant à distribuer ledit contenu de synchronisation ;
un dispositif de reproduction servant à recevoir ledit flux de données IP distribué en provenance dudit serveur de diffusion en continu et ledit contenu de synchronisation distribué en provenance dudit serveur Web ; et
un dispositif de calcul de temps de déclenchement servant à calculer une différence de temps entre un temps indiquant ledit code temporel qui est lu en provenance dudit flux de données IP par ledit décodeur et un temps absolu et servant à calculer un temps de déclenchement qui correspond à ladite différence de temps par l'ajout de ladite différence de temps ayant été calculée à un temps d'occurrence de déclenchement du contenu de synchronisation,
dans lequel ledit serveur Web est configuré pour distribuer ledit contenu de synchronisation audit dispositif de reproduction en vue de permettre audit dispositif de reproduction d'exécuter un traitement sur ledit contenu de synchronisation à un moment dans le temps où ledit code temporel intégré dans ledit flux de données IP coïncide avec le temps d'occurrence de déclenchement du contenu de synchronisation reçu en provenance dudit serveur Web,
dans lequel ledit serveur Web est configuré pour distribuer ledit contenu de synchronisation lu en provenance dudit dispositif de stockage en se basant sur ledit temps de déclenchement calculé par ledit dispositif de calcul de temps de déclenchement audit dispositif de reproduction au moins audit temps de déclenchement ou par la suite,
dans lequel ledit serveur Web comporte de multiples sources qui correspondent à différentes longueurs de temps de tampon efficaces qui sont formées en ajoutant respectivement les différentes longueurs de temps de tampon audit temps de déclenchement calculé par ledit dispositif de calcul de temps de déclenchement,
dans lequel lesdites longueurs de temps de tampon correspondent au temps pour un tamponnage d'une diffusion en continu en vue d'afficher ledit contenu de synchronisation sur ledit dispositif de reproduction, et sont réglées dans ledit dispositif de reproduction à des fins d'application audit contenu de synchronisation,
dans lequel chacune desdites multiples sources comporte une pluralité de zones d'affichage sous une forme hiérarchique, qui sont configurées de telle sorte qu'un élément de source qui correspond à un groupe de données nécessaire pour un affichage du contenu de synchronisation est écrit dedans.

2. Système de distribution de radiodiffusion de contenu de synchronisation selon la revendication 1, dans lequel ledit dispositif de reproduction comporte de multiples sources qui correspondent auxdites différentes longueurs de temps de tampon fournies dans ledit serveur Web, dans lequel, quand une longueur de temps de tampon spécifique est demandée, le traitement du contenu de synchronisation est exécuté en se basant sur l'élément de source écrit sur la zone d'affichage de la source qui correspond à la longueur de temps de tampon spécifique demandée.

3. Système de distribution de radiodiffusion de contenu de synchronisation selon l'une ou l'autre parmi la revendication 1 ou la revendication 2, dans lequel ledit dispositif de reproduction est configuré pour lire lesdites multiples sources fournies dans ledit serveur Web à des intervalles de temps fixes, et est également configuré pour effectuer une mise à jour d'une source correspondante dans ledit dispositif de reproduction sans délai quand une mise à jour de ladite source est exécutée dans ledit serveur Web, de telle sorte que le traitement du contenu de synchronisation est exécuté en se basant sur l'élément de source écrit sur ladite source mise à jour.

4. Système de distribution de radiodiffusion de contenu de synchronisation selon l'une quelconque des revendications 1 à 3, dans lequel ledit dispositif de reproduction comporte une fonction d'expansion servant à des fins d'expansion d'une zone d'affichage dans un logiciel de reproduction dudit dispositif de reproduction, par la lecture d'une source associée à un élément de source pour un affichage de contenu de synchronisation par expansion lu dans ladite source, avec un déclenchement d'un affichage de contenu de synchronisation, dans lequel une restriction sur ledit affichage de contenu de synchronisation est supprimée en fonction de ladite fonction d'expansion.

5. Système de distribution de radiodiffusion de contenu de synchronisation selon l'une quelconque des revendications 1 à 4, dans lequel ledit dispositif de reproduction comporte une fonction de prise en charge servant à changer une zone d'affichage dans un logiciel de reproduction dudit dispositif de reproduction pour un contenu de synchronisation pendant un temps fixe uniquement, par la lecture d'une source associée à un élément de source pour un affichage de contenu de synchronisation par prise en charge lu dans ladite source, avec un déclenchement d'un affichage de contenu de synchronisation, dans lequel une restriction sur ledit affichage de contenu de synchronisation est supprimée en fonction de ladite fonction de prise en charge.

6. Système de distribution de radiodiffusion de contenu de synchronisation selon l'une quelconque des revendications 1 à 5, dans lequel ledit dispositif de reproduction comporte une fonction de sous-séquence servant à changer une zone d'affichage dans un logiciel de reproduction dudit dispositif de reproduction à la manière d'un diaporama, en synchronisation avec le contenu de la partie principale dans un programme de radiodiffusion, par la lecture d'une source associée à un élément de source pour un affichage de contenu de synchronisation par sous-séquence lu dans ladite source, avec un déclenchement d'un affichage de contenu de synchronisation, dans lequel une restriction sur ledit affichage de contenu de synchronisation est supprimée en fonction de ladite fonction de sous-séquence.
